(19) Europäisches Patentamt
European Patent Office
Office européen des brevets

(11) **EP 2 075 739 B1**

(12) **EUROPEAN PATENT SPECIFICATION**

(45) Date of publication and mention
of the grant of the patent:
**07.03.2012 Bulletin 2012/10**

(51) Int Cl.:
***G06K 7/10*** *(2006.01)*

(21) Application number: **08005309.3**

(22) Date of filing: **20.03.2008**

(54) **Bar code processing apparatus, sorting apparatus and bar code processing method**

Strichcodeverarbeitungsvorrichtung, Sortiervorrichtung und Strichcodeverarbeitungsverfahren

Appareil de traitement de code-barres, appareil de tri et procédé traitement de code-barres

(84) Designated Contracting States:
**DE FR GB IT**

(30) Priority: **27.12.2007 JP 2007337800**

(43) Date of publication of application:
**01.07.2009 Bulletin 2009/27**

(73) Proprietor: **Kabushiki Kaisha Toshiba**
**Minato-ku,**
**Tokyo 105-8001 (JP)**

(72) Inventors:
• **Ariyoshi, Shunji**
**Tokyo 105-8001 (JP)**
• **Akagi, Takuma**
**Tokyo 105-8001 (JP)**

(74) Representative: **HOFFMANN EITLE**
**Patent- und Rechtsanwälte**
**Arabellastraße 4**
**81925 München (DE)**

(56) References cited:
**WO-A-97/33248**

**Description**

This invention relates to a bar code processing apparatus that processes a bar code attached to an article such as a paper sheet, a sorting apparatus that performs a sorting process based on the bar code attached to the article such as the paper sheet and a bar code processing method applied to the bar code processing apparatus or the like.

Conventionally, for example, some of sorting apparatuses that sort articles recognize bar codes indicating sorting information items printed on the respective articles and perform the sorting processes. For example, in a sorting system that sorts mails, the operation of converting address information into a bar code and printing the bar code on a mail is put into practice. In the above sorting apparatus, the bar code printed on an article such as a mail is recognized by use of a bar code reader provided in the apparatus (for example, refer to Jpn. Pat. Appln. KOKAI Publication No. 2006-65679).

However, when bar codes are doubly printed (double-printed), it becomes difficult for the bar code reader to correctly read the bar code (that is, to precisely recognize sorting information indicated by the bar code). For example, in the sorting system that sorts mails by use of bar codes, a process of converting address information into a bar code and printing the bar code on a mail and a process of recognizing the bar code printed on the mail to perform a sorting process according to the address are provided. In this operation, there occurs a possibility that a plurality of bar codes may be overprinted on one mail. For example, if a receiver of a mail moves and does not live in an addressed location, the delivered mail may be put into a mailbox again. The mail put into the mailbox again is collected together with normal mails. Therefore, a process of printing a bar code again on the mail that was put into the mailbox again and collected together with normal mails may be performed by the sorting apparatus. In such a case, the possibility that the bar code is double-printed on the mail put into the mailbox again becomes strong.

In the sorting system that sorts mails in the above operating condition, there is provided a possibility that a mail on which bar codes are double-printed causes the following problems.

(1) It is difficult to clearly read a bar code indicating specified sorting information from a mail on which bar codes are double-printed. Therefore, the bar code reader may cause erroneous recognition of a bar code. If the bar code is erroneously recognized, the mail is sorted into an erroneous sorting destination. If the mail is thus erroneously sorted, the mail is not correctly processed and, at the same time, it becomes necessary to process the mail by finally performing a manual operation.

(2) Further, there is a strong possibility that a mail put into a mailbox again because the receiver does not live there any more may be delivered again to the destination in which the receiver does not live even when the bar code indicating specified sorting information is correctly recognized. In such a case, the wasteful operation of repeatedly delivering the mail to the destination in which the receiver does not live any more is repeatedly performed.

In addition to the above, WO 97/33248 was found to disclose a bar code processing apparatus with an image detecting portion, a bar detecting portion, a decoding portion, and a so-called defect bar code detecting portion. However, the respective teaching is not at all concerned with overprinting and determining whether or not a plurality of bar codes are overprinted or not.

According to one aspect of the present invention, an object is to provide a bar code processing apparatus, sorting apparatus and bar code processing method capable of detecting a plurality of bar codes that are overprinted.

According to one aspect of the present invention, there is provided a bar code processing apparatus comprising an image acquiring portion that acquires an image containing a bar code, a bar detecting portion that detects a plurality of bars configuring a bar code based on the image acquired by the image acquiring portion, a decoding portion that recognizes information indicated by the bar code configured by the bars based on states of the bars detected by the bar detecting portion, an overprinting detecting portion that determines whether a plurality of bar codes are overprinted or not based on states of the bars detected by the bar detecting portion, and a determining portion that determines that a result of recognition of the bar code by the decoding portion is invalid information when the overprinting detecting portion detects that a plurality of bar codes are overprinted and outputs a result of recognition of the bar code by the decoding portion as valid information when the overprinting detecting portion does not detect that a plurality of bar codes are overprinted.

According to another aspect of the present invention, there is provided a sorting apparatus that sorts articles based on sorting information, comprising: a scanner that reads an image containing a bar code printed on an article, a bar detecting portion that detects a plurality of bars configuring a bar code based on the image read by the scanner, a decoding portion that recognizes information indicated by the bar code configured by the bars based on states of the bars detected by the bar detecting portion, an overprinting detecting portion that determines whether a plurality of bar codes are overprinted or not based on states of the bars detected by the bar detecting portion, a determining portion that determines that information recognized by the decoding portion is invalid information when the overprinting detecting portion detects that a plurality of bar codes are overprinted and determines a result of recognition of the bar code by the decoding portion as valid sorting information of the article when the overprinting detecting portion does not detect that a plurality of bar codes are overprinted, and a sorting portion that sorts the article based on the recognition result of the bar code determined as the sorting information of the article by the determining portion.

According to still another aspect of the present invention, there is provided a bar code processing method used in a bar code processing apparatus, comprising the steps of: acquiring an image containing a bar code, detecting a plurality of bars configuring a bar code based on the thus acquired image, recognizing information indicated by the bar code configured by the bars based on states of the detected bars, performing an overprinting detecting process to determine whether a plurality of bar codes are overprinted or not based on states of the detected bars, determining that a result of recognition of the bar code is invalid information when it is detected by the overprinting detecting process that a plurality of bar codes are overprinted, and outputting a result of recognition of the decoded bar code as valid information when it is not detected by the overprinting detecting process that a plurality of bar codes are overprinted.

The invention can be more fully understood from the following detailed description when taken in conjunction with the accompanying drawings, in which:

FIG. 1 is a diagram showing the schematic configuration of a sorting system that sorts paper sheets (articles) or the like according to one embodiment of this invention.

FIG. 2 is a block diagram showing an example of the configuration of a bar code reader 12.

FIG. 3 is a diagram showing an example of a four-state bar code.

FIG. 4 is a diagram showing an example of a bar code image in a state in which two bar codes are doubly printed (double-printed) (fluorescent image read by a fluorescent scanner 13).

FIG. 5A is a diagram showing an example of a bar code image in a state in which two bar codes having different bar intervals are double-printed.

FIG. 5B is a diagram showing light-and-shade information of scanning lines shown in FIG. 5A.

FIG. 5C is a diagram showing the result of frequency analysis with respect to the light-and-shade information shown in FIG. 5B.

FIG. 6 is a flowchart for schematically illustrating the flow of a double-printing detecting process based on bar intervals.

FIG. 7A is a diagram showing an example of a bar code image in a state in which two bar codes having different total lengths are overprinted (double-printed).

FIG. 7B is a diagram showing bars to be corrected as errors when a first bar code is used as a reference in the bar code image of FIG. 7A.

FIG. 8 is a flowchart for schematically illustrating the flow of a double-printing detecting process based on the positions of error-corrected bars.

FIG. 9 is a diagram showing an example of a bar code image in a state in which bars configuring a first bar code and bars configuring a second bar code are overprinted (double-printed).

FIG. 10 is a flowchart for schematically illustrating the flow of a double-printing detecting process based on the types of error-corrected bars.

FIG. 11 is a diagram showing an example of a bar code image in which two bar codes are overprinted (double-printed).

FIG. 12 is a flowchart for schematically illustrating the flow of a double-printing detecting process based on the lengths of respective bars.

FIG. 13 is a diagram showing an example of a bar code image of a four-state bar code correctly printed.

FIG. 14A is a diagram showing an example of a bar code in a correctly printed state.

FIG. 14B is a diagram showing end points of respective bars configuring the bar code shown in FIG. 19A.

FIG. 14C is a diagram showing projection values of the end points of the bars shown in FIG. 14B in a direction (the lengthwise direction of the bar) perpendicular to the arrangement direction of the bars.

FIG. 15 is a flowchart for schematically illustrating the flow of a double-printing detecting process based on the end points of respective bars.

There will now be described an embodiment of the present invention with reference to the accompanying drawings.

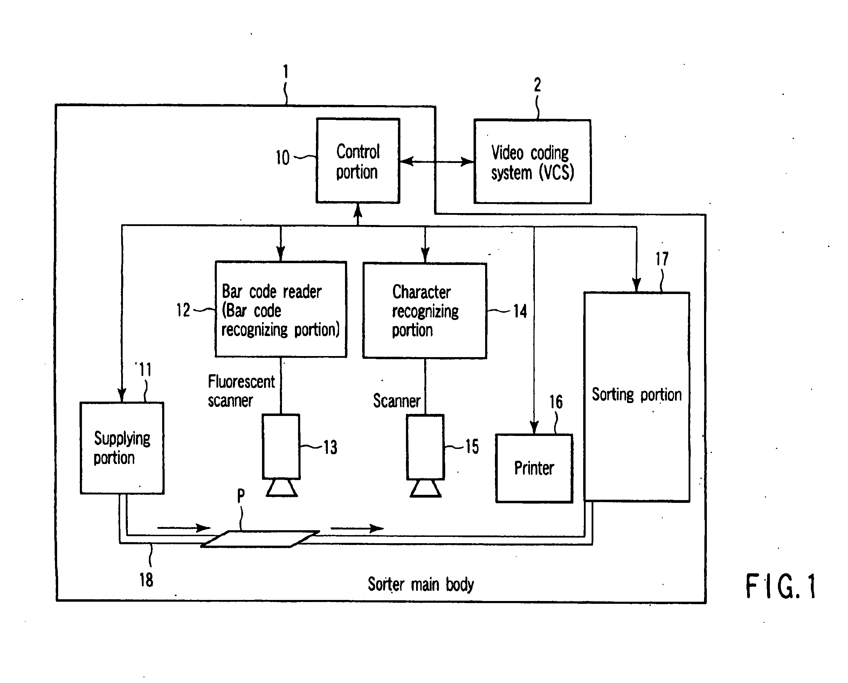

FIG. 1 is a diagram showing the schematic configuration of a sorting system that sorts paper sheets (articles) according to one embodiment of this invention.

As shown in FIG. 1, the sorting system is configured by a sorter main body (sorter) 1 and VCS (Video Coding System) 2. The sorter 1 recognizes information (sorting information, address information) indicating a sorting destination of a paper sheet or the like and sorts the same. Further, the VCS 2 recognizes sorting information of the paper sheet or the like whose sorting information cannot be recognized by the sorter 1 by use of a recognition process different from that of the sorter 1 or inputs sorting information by a coding operation of an operator.

First, the sorter main body 1 is explained.

As shown in FIG. 1, the sorter main body 1 includes a control portion 10, supplying portion 11, bar code reader (bar code recognizing portion) 12, fluorescent scanner 13, character recognizing portion 14, scanner 15, printer 16, sorting portion 17, feeding path 18 and the like. In the configuration example shown in FIG. 1, the control portion 10 is connected to the supplying portion 11, bar code reader 12, character recognizing portion 14, printer 16, sorting portion 17, feeding path 18 and the like. Further, the control portion 10 is connected to the video recording device (VCS) 2.

The control portion 10 controls the whole portion of the sorter main body 1. For example, the control portion 10 is configured by an electronic computer having a CPU, various memories and various interfaces. The control portion 10 has a function of performing various processes by causing the CPU to execute programs stored in the memory. For example, the control portion 10 is connected to the respective portions via the various interfaces and controls the operations of the respective portions based on control programs stored in the memory. Further, an operating panel (not shown) that displays guidance for the operator or to which an operation instruction is input from the operator is connected to the control portion 10.

The sorter main body 1 is used to sort a paper sheet or the like on a first surface of which numerals or characters are written or printed as information (sorting information) indicating a sorting destination. The sorter main body 1 has the supplying portion 11 that receives a plurality of paper sheets arranged with the first surfaces set in the same direction. In the supplying portion 11, a takeout portion (not shown) that takes out received paper sheets one by one is provided. The supplying portion 11 is connected to the feeding path 18 along which the paper sheet is fed. The supplying portion 11 sequentially supplies paper sheets fetched one by one to the feeding path 18.

The feeding path 18 feeds paper sheets based on the control operation by the control portion 10. For example, the feeding path 18 feeds each paper sheet at a constant feeding speed. That is, the paper sheets sequentially fetched at constant intervals in the supplying portion 11 are fed at constant feeding intervals (pitches) and at a constant feeding speed by the feeding path 18. Further, whether the paper sheets fetched by the supplying portion 11 contain a foreign matter that cannot be mechanically processed or not is detected by an exclusion detecting portion (not shown). A paper sheet containing a foreign matter that cannot be mechanically processed is excluded by the exclusion detecting portion and only the paper sheet that can be mechanically processed is fed along the feeding path 18.

Along the feeding path 18, the fluorescent scanner 13, scanner 15, printer 16 and sorting portion 17 are provided. The fluorescent scanner 13 is connected to the bar code reader 12 and the scanner 15 is connected to the character recognizing portion 14.

The fluorescent scanner 13 is used to read an image (bar code image) printed in fluorescent ink on the first surface of a paper sheet fed along the feeding path 18. The fluorescent scanner 13 reads an image printed in fluorescent ink on the first surface of the paper sheet and supplies the thus read image to the bar code reader 12. That is, the fluorescent scanner 13 reads an image containing a bar code from the first surface of the paper sheet on which the bar code is printed in fluorescent ink. The bar code reader 12 recognizes information (sorting information) indicated by the bar code printed in fluorescent ink based on an image (bar code image) of fluorescent ink read by the fluorescent scanner 13. The bar code recognition result is supplied from the bar code reader 12 to the control portion 10.

In the present embodiment, it is supposed that a bar code printed in fluorescent ink on each paper sheet is attained by encoding sorting information of each paper sheet. Further, as the information printed as a bar code on each paper sheet in fluorescent ink, an ID code indicating identification information of each paper sheet may be assumed in addition to a mechanical code obtained by encoding address information. The above code is printed on each paper sheet by use of a printer which will be described later. That is, the paper sheet from which the bar code printed in fluorescent ink is read by use of the fluorescent scanner 13 is a paper sheet that has already been subjected to a process of printing the bar code indicating the sorting information.

The scanner 15 is used to read an image (an image containing character information as sorting information) described on the first surface of a paper sheet fed on the feeding path 18. The scanner 15 reads an image of the first surface of the paper sheet and supplies the thus read image to the character recognition portion 14. The character recognizing portion 14 performs a recognition process for character information (sorting information) contained in the image read by the scanner 15. The character recognition result is supplied from the character recognizing portion 14 to the control portion 10. For the paper sheet whose character information cannot be completely recognized by the character recognizing portion 14, it is possible to provide a system (On-line VCS) by which the operator inputs sorting information until the paper sheet is fed to the printer 16.

In the character recognizing portion 14, the character recognition result (sorting information recognition result) is acquired while the bar code printing process for the paper sheet is started by the printer 16 (within a preset period of time). When the sorting information of the paper sheet cannot be recognized by the character recognizing process, the character recognizing portion 14 may generate information such as the size of the paper sheet, the size of the character, the direction of the characters, the notation direction of sorting information, the type of characters, the degree of recognition or information indicating a portion that is required to be processed by the VCS 2 as collateral information for an image of the paper sheet and supply the thus generated information to the control portion 10. In this case, in the VCS 2, the process such as a coding operation can be performed by using collateral information obtained in the character recognizing process by the character recognizing portion 14.

The printer 16 prints a bar code such as a mechanical code or ID code in fluorescent ink on the first surface of a paper sheet as required. The printer 16 prints an image obtained by converting a mechanical code into a bar code form based on sorting information in fluorescent ink for a paper sheet whose sorting information can be recognized by the character recognizing portion 14. Further, it prints an image obtained by converting an ID code used for identifying a paper sheet into a bar code form in fluorescent ink for the paper sheet whose sorting information cannot be recognized by the character recognizing portion 14.

The printer 16 prints bars that configures a bar code starting from the preset print starting position on a paper sheet fed along the feeding path 18. Therefore, the bars configuring the bar code are printed in order in the feeding direction of the paper sheet by the feeding path 18. That is, the printer 16 prints the bar code with the arrangement direction of the bars set equal to the feeding direction of the paper sheet. It is predicted that the feeding state of the paper sheet may be changed in a preset permissible range on the feeding path 18. Therefore, the printer 16 may print a bar code in a printing state that is different according to the feeding state of the paper sheet that varies in a preset permissible range. For example, it is considered that the pitch of the bars (the interval of the bars) configuring the bar code may vary according to a variation in the feeding speed of a paper sheet even if the interval of the bars to be printed by the printer 16 is constant. Further, it is considered that the printing position of the bar code in a direction perpendicular to the feeding direction may vary according to a variation in the feeding state of the paper sheet.

The sorting portion 17 has a plurality of sorting pockets used to sort and store paper sheets. For example, the sorting portion 17 has a plurality of sorting pockets that are divided in plural stages and plural columns. Further, the sorting portion 17 has a plurality of gate mechanisms and branch feeding paths. In the sorting portion 17, paper sheets are fed into desired sorting pockets by controlling the gate mechanisms. The sorting pockets are provided for respective sorting destinations.

That is, in the sorting portion 17, paper sheets are sequentially stored in the respective sorting pockets according to sorting information. Further, the sorting portion 17 has a VCS discharging pocket (not shown) in which paper sheets whose sorting information cannot be specified by the character recognizing portion 14 (paper sheets on which only ID codes are printed). The paper sheet stored in the VCS discharging pocket is supplied to the supplying portion 11 again after sorting information is input thereto by the VCS 2 and then sorted again based on the ID code of the paper sheet and sorting information input by the VCS 2.

In the above sorting system, it is supposed to perform a step of printing a bar code that specifies sorting information for each paper sheet and a step of sorting each paper sheet according to a bar code printed on the paper sheet. For example, it is supposed that the above sorting system is applied to an operation in which paper sheets (mails) collected in a collecting station are delivered in a plurality of delivering stations. In this case, in the sorter installed in the collecting station, the sorting information items of paper sheets are specified by the character recognizing portion 14 or VCS 2, bar codes indicating the respective specified sorting information items are printed on the paper sheets in fluorescent ink and the paper sheets on which the bar codes are thus printed are sorted for the respective delivering stations. Further, in the sorting system installed in the delivering station, the paper sheets on which the bar codes are already printed are sorted for respective sorting information items (delivering destinations) indicated by the bar codes. In this operating condition, in the sorter of the delivering station, the sorting information of each paper sheet can be specified with high precision simply by reading the bar code printed on the paper sheet in fluorescent ink and thus the efficient sorting process can be performed.

Next, an example of the configuration of the bar code reader (bar code recognizing portion) 12 is explained.

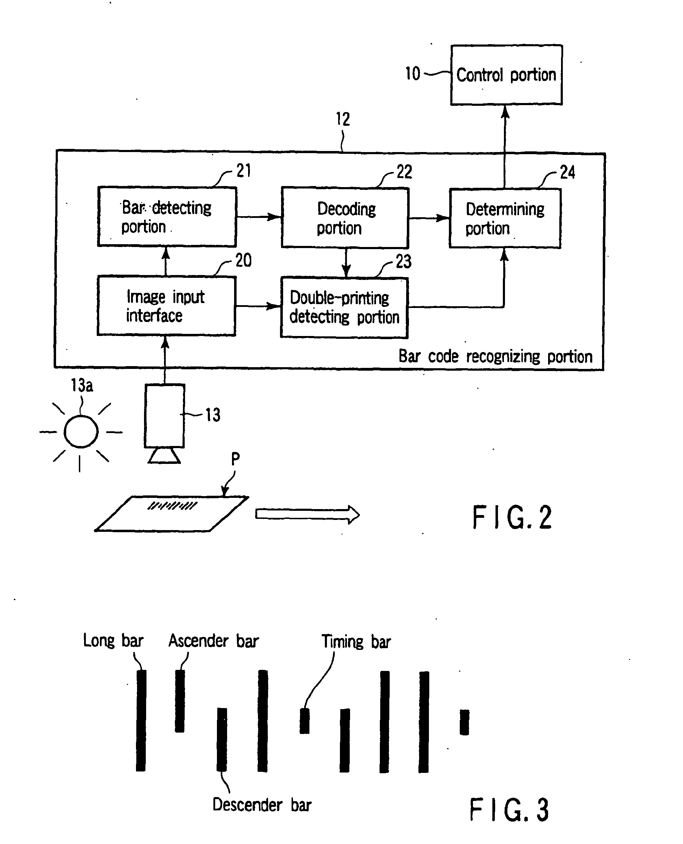

FIG. 2 is a block diagram showing an example of the configuration of the bar code reader 12.

As shown in FIG. 2, the bar code reader 12 includes an image input interface 20, bar detecting portion 21, decoding portion 22, double-printing detecting portion 23 and determining portion 24. The fluorescent scanner 13 is connected to the image input interface 20 and the control portion 10 is connected to the determining portion 24.

As shown in FIG. 2, an illuminator 13a that applies light to activate a fluorescent material contained in fluorescent ink is provided near the fluorescent scanner 13 so as to face the first surface of a paper sheet P that is now fed. For example, the illuminator 13a is configured by a fluorescent light or LED. The fluorescent scanner 13 receives fluorescent light reflected from the first surface of the paper sheet P which is now fed and to which light from the illuminator 13a is applied. That is, the fluorescent scanner 13 acquires a bar code printed in fluorescent ink on the first surface of the paper sheet P as image information (fluorescent image). The fluorescent image read by use of the fluorescent scanner 13 is supplied to the bar detecting portion 21 and double-printing detecting portion 23 via the image input interface (image acquiring portion) 20 of the bar code reader 12.

The image input interface 20 is an interface that inputs a fluorescent image (bar code image) read by the fluorescent scanner 13. The fluorescent image acquired by use of the fluorescent scanner 13 is supplied to the bar detecting portion 21 and double-printing detecting portion 23 via the image input interface 20.

The bar detecting portion 21 detects a bar code from the fluorescent image read by the fluorescent scanner 13. That is, the bar detecting portion 21 detects bars configuring a bar code based on the fluorescent image. The bar detecting portion 21 determines the type of the respective detected bars. For example, the bar detecting portion 21 determines the type of each bar based on the length of each bar and the relative position thereof in the whole bar code according to the bar code specification. The bar detecting portion 21 supplies information indicating the type of each detected bar and information indicating the arrangement of the bars to the decoding portion 22 as the detection result of the bar code.

The decoding portion 22 decodes the bar code detected by the bar detecting portion 21. The decoding portion 22 decodes the bar code based on information indicating the type of each bar and information indicating the arrangement of the bars as the detection result of the bar code supplied from the bar detecting portion 21. The decoding portion 22 has a function of correcting an error based on an error correction code as will be described later. That is, the decoding portion 22 decodes information indicated by the bar code based on the detection result by the bar detecting portion 21, and at the same time, corrects the decoded information by an error correction process based on an error correction code. Thus, the bar code printed on the paper sheet in a normal state is decoded as sorting information (for example, postal code information or address information) of the paper sheet by the decoding portion 22.

The double-printing detecting portion (overprinting detecting portion) 23 determines whether a plurality of bar codes are printed in a superposed form or not. That is, the double-printing detecting portion 23 determines whether a plurality of bar codes are overprinted or not based on the feature of a fluorescent image read by the fluorescent scanner 13. The double-printing detecting portion 23 determines whether a plurality of bar codes are overprinted or not with reference to the result of the process such as the error correction process by the decoding portion 22. The double-printing detecting portion 23 supplies the detection result of double printing of the bar code to the determining portion 24. The double-printing detecting process performed in the double-printing detecting portion 23 is explained in detail later.

The determining portion 24 determines whether the bar code decoding result by the decoding portion 22 is made valid or not based on the detection result of double.printing of the bar code by the double printing detecting portion 23. When receiving the detection result indicating that the double-printing of the bar code is not detected, the determining portion 24 outputs sorting information to the control portion 10 as the decoding result obtained by the decoding portion 22. Further, when receiving the detection result indicating that the double printing of the bar code is detected, the determining portion 24 discards sorting information as the decoding result obtained by the decoding portion 22. In this case, the determining portion 24 supplies information indicating that the double printing of the bar code is detected to the control portion 10. When the bar detecting portion 21 cannot detect a bar code, that is, when a bar code is not printed on the paper sheet, the determining portion 24 supplies information indicating that the bar code is not detected to the control portion 10.

The control portion 10 performs a sorting process for the paper sheet based on information supplied from the determining portion 24 of the bar code reader 12. For example, when receiving information to the effect that the bar code is double-printed, the control portion 10 performs a control operation to feed the paper sheet to a sorting pocket for double printing (or a sorting pocket in which a paper sheet whose bar code cannot be read is stored). Further, when receiving sorting information as a bar code recognition result, the control portion 10 performs a control operation to feed the paper sheet to a sorting pocket corresponding to the sorting information.

Next, a bar code used to express sorting information is explained.

Bar codes of various specifications are provided. For example, as a bar code used to sort mails, bar codes of various specifications for various countries are used. For example, as a bar code used to sort mails, a four-state bar code used to code sorting information and express the sorting information by use of the arrangement of four types of bars is provided.

FIG. 3 is a diagram showing an example of a four-state bar code.

As shown in FIG. 3, the four-state bar code is expressed by use of four types of bars including a long bar, ascender bar, descender bar and timing bar. That is, in the four-state bar code, sorting information is coded so as to be expressed by the arrangement of four types of bars.

It is supposed that an error correction code such as a Reed-Solomon code is used to perform a coding process into a bar code, for example. The error correction code is redundant information added to information coded by use of the bar code. Thus, even if several bars among the bars configuring the bar code are erroneously detected by the bar detecting portion 21, the decoding portion 22 can correctly restore information (correct erroneous information) based on the error correction code. For example, the Reed-Solomon code is described in the document (Imai: "Coding Theory", Institute of Electronics, Information and Communication Engineers of Japan, 1990).

Next, the double-printing detecting process by the double-printing detecting portion 23 is explained.

Various systems can be applied to the double-printing detecting process of a bar code in the double-printing detecting portion 23. In the present embodiment, as an example of a method for detecting a double-printing state of bar codes, the following five types of methods (first to fifth double-printing detecting processes) are explained.

(1) A method in which attention is paid to the bar interval (first double-printing detecting process)
(2) A method in which attention is paid to the position of a bar subjected to an error correction process (second double-printing detecting process)

(3) A method in which attention is paid to the type of a bar subjected to an error correction process

(third double-printing detecting process)

(4) A method in which attention is paid to the size of bars (fourth double-printing detecting process
(5) A method in which attention is paid to a straight line that connects the end points of bars (fifth double-printing detecting process

In the above methods, some of them can freely be combined and embodied. That is, the double-printing detecting portion 23 can perform the detecting process of double printing of a bar code by use of some of the above methods. In this case, the double-printing detecting portion 23 can generally determine whether the double-printing state of a bar code is present or not based on the double-printing detecting result by use of the above methods. For example, when the double-printing state of a bar code is detected by use of any one of the above systems, the double-printing detecting portion 23 may determine that the double-printing state occurs. Further, when the double-printing state of a bar code is not by use of any one of the above systems, the double-printing detecting portion 23 may determine that the double-printing state does not occur. In the double-printing detecting portion 23 based on the above assumption, the double-printing states of bar codes printed on paper sheets in various conditions can be stably detected.

Next, a first double-printing detecting process as the bar code double-printing detecting process in the double-printing detecting portion 23 is explained.

The first double-printing detecting process is a process for detecting a double-printing state of bar codes by paying attention to the intervals of bars configuring bar codes (the double-printing detecting process based on the intervals of bars). Generally, in a plurality of bar codes printed at different timings or by different printers, the pitches of bars are different in many cases. The first double-printing detecting process is to detect that the bar codes whose bar intervals (pitches) are different are overprinted. That is, the first double-printing detecting process is a process for determining whether a plurality of bar codes having different bar pitches (bar intervals) are present or not.

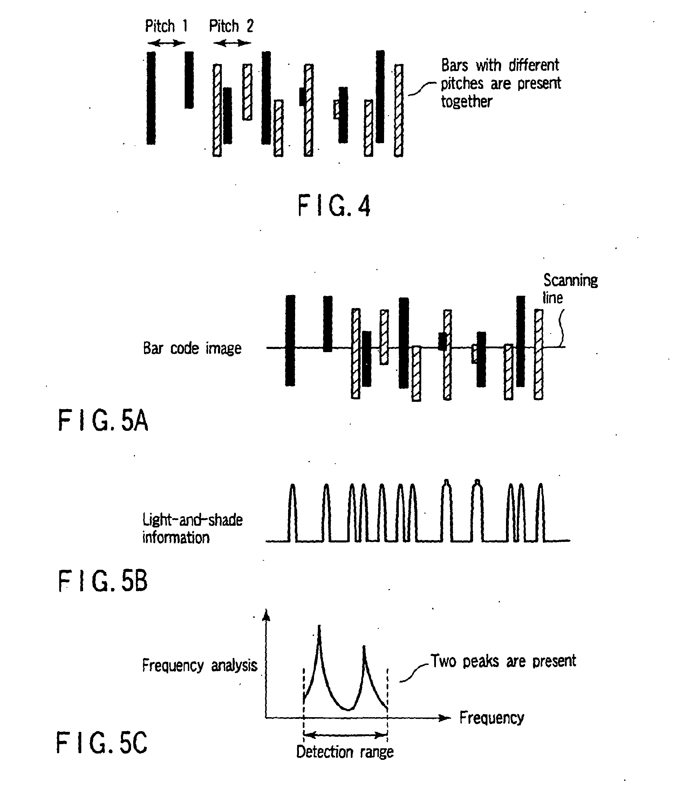

FIG. 4 is a diagram showing an example of a bar code image in a state in which two bar codes are doubly printed (double-printed) (a fluorescent image read by the fluorescent scanner 13).

In the sorting system shown in FIGS. 1 and 2, all of the bars configuring each bar code are detected as a fluorescent image. However, in FIG. 4, in order to make it possible to easily and visually observe the state in which two bar codes are overprinted, a first bar code configured by a plurality of bars is shown in black and a second bar code configured by a plurality of bars is indicated by oblique lines. That is, in FIG. 4, an example of a bar code image in which the first and second bar codes having different bar pitches (bar intervals) is shown.

FIGS. 5A to 5C are diagrams for illustrating the double-printing detecting process by the first double-printing detecting process for the bar code image as shown in FIG. 4.

Like the case of FIG. 4, FIG. 5A is a diagram showing an example of a bar code image in a state in which two bar codes having different bar intervals are double-printed. FIG. 5B is a diagram showing light-and-shade information of scanning lines shown in FIG. 5A. FIG. 5C is a diagram showing the result of frequency analysis with respect to the light-and-shade information shown in FIG. 5B.

In the example shown in FIG. 5B, the light-and-shade information indicating the positions of all of the bars shown in FIG. 5A is obtained. That is, the light-and-shade information as shown in FIG. 5B is obtained by use of scanning lines extending in a direction perpendicular to the lengthwise direction of each bar shown in FIG. 5A and passing through all of the bars.

When the frequency analyzing process is performed for the light-and-shade information as shown in FIG. 5B by use of a method such as an FFT (Fast Fourier Transform) method, frequency distribution as shown in FIG. 5C is obtained.

In the frequency distribution as shown in FIG. 5C, the number of peaks corresponds to the number of bar codes configured by a plurality of bars (bar groups) arranged at preset intervals. That is, when a plurality of bar codes are configured by a plurality of bars arranged at different intervals (intervals inherent to the respective bar codes), the number of bar codes having different intervals appears as the number of peaks in the frequency distribution as shown in FIG. 5C. For example, when the two bar codes having different intervals as shown in FIG. 5A are overprinted, the frequency distribution having two peaks as shown in FIG. 5C is obtained.

In the example shown in FIG. 5C, a frequency range (detection range) is provided for frequencies to be detected. In this case, the pitch of bars (bar interval) configuring the bar code used in the sorting system generally varies depending on the paper sheet feeding speed or the state of the printer, but it is assumed that the variation range is set within a constant permissible range. That is, in the frequency analysis shown in FIG. 5C, the bar groups arranged at intervals within the preset permissible range are detected as bar codes.

Next, the flow of the double-printing detecting process (first double-printing detecting process) based on the above bar intervals is explained.

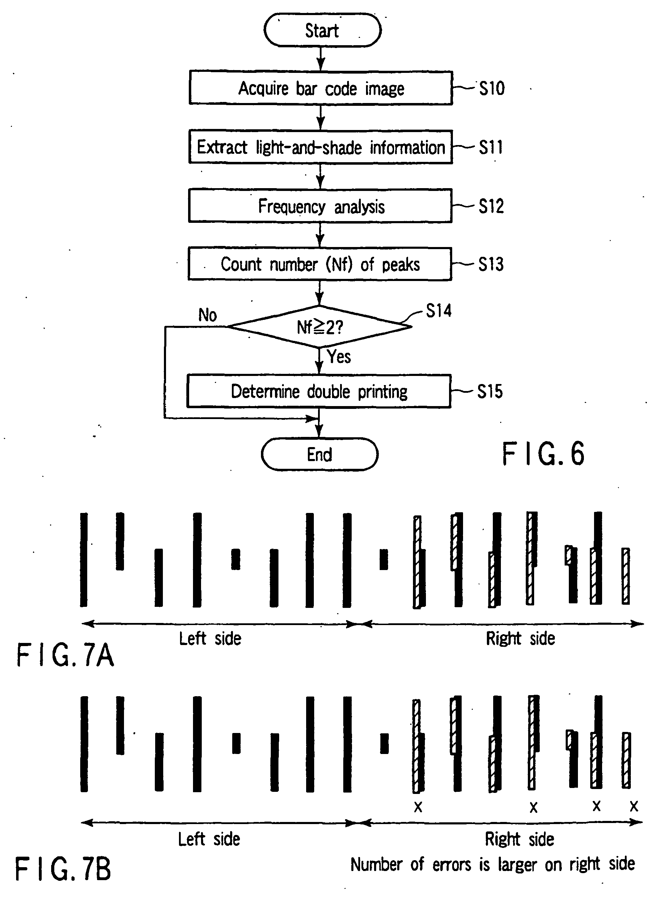

FIG. 6 is a flowchart for schematically illustrating the flow of the first double-printing detecting process based.

As described above, a fluorescent image (bar code image) read by the fluorescent scanner 13 is supplied to the double-printing detecting portion 23. When the bar code image read by the fluorescent scanner 13 is obtained, the double-printing detecting portion 23 determines scanning lines extending in a direction perpendicular to the lengthwise side of each bar of the bar code image and scanning the largest number of bars as shown in FIG. 5A, for example. If the scanning lines in the bar code image are determined, the double-printing detecting portion 23 extracts light-and-shade information in the scanning lines (step S11).

When the light-and-shade information is obtained, the double-printing detecting portion 23 subjects the thus obtained light-and-shade information to frequency analysis by use of a method such as a fast Fourier transform method (S12). When the frequency distribution as the result of the frequency analysis is obtained, the double-printing detecting portion 23 counts the number (N) of frequencies at which the peak appears in the frequency distribution (step S13). In this case, as the number (N) of peaks, for example, the number of frequencies at which the maximum value larger than the preset value appears in the frequency distribution is counted.

If the number (N) of peaks as the result of the frequency analysis is counted, the double-printing detecting portion 23 determines whether the number of peaks is plural or not (N≥2) (step S14). As described above, the number of peaks obtained as the result of the frequency analysis corresponds to the number of bar codes in which plural bars are arranged at different intervals.

Therefore, when the double-printing detecting portion 23 determines that the number of peaks in the frequency distribution is plural ("YES" in the step S14), it determines that a plurality of bar codes having different bar intervals are overprinted in the bar code image (step S15). On the other hand, when it is determined that the number of peaks in the frequency distribution is one ("NO" in the step S14), the double-printing detecting portion 23 determines that a plurality of bar codes having different bar intervals cannot be detected at least in a range that can be detected by the frequency analysis.

As described above, in the double-printing detecting method (first double-printing detecting method) of bar codes based on the bar intervals, whether a plurality of bar codes having different bar intervals are provided or not is determined depending on whether a plurality of bar groups having a specified interval are provided in an entire image of the bar codes (a fluorescent image read by the fluorescent scanner 13). That is, in the first double-printing detecting process, whether or not plural bar codes are present is determined by subjecting the bar code image (the fluorescent image read by the fluorescent scanner 13) to the frequency analysis in the arrangement direction of the bars. Thus, it is easily determined according to the first double-printing detecting process that a plurality of bar codes are overprinted with the bars shifted in the arrangement direction of the bars.

Next, the second double-printing detecting process as the double-printing detecting process is explained.

The second double-printing detecting process is a process of detecting a double-printing state of bar codes by paying attention to the position of an error-corrected bar (a double-printing detecting process based on the position of an error-corrected bar). That is, in the second double-printing detecting process, it is detected that a plurality of bar codes having different total lengths (different numbers of bars) are overprinted in a preset position (substantially the same position) on the paper sheet.

Generally, bar codes with specifications configured by desired numbers of bars are provided among bar codes with various specifications. In the bar codes with the above specifications, the lengths of the bar codes (the numbers of bars) are different if information items to be expressed are different. Therefore, it is considered that a feature appears in the distribution of bars erroneously recognized (bars to be error-corrected) if a plurality of bar codes with the different total lengths are overprinted in a preset position (substantially the same position). That is, when bar codes with different lengths are printed with substantially the same position set as a reference, it is considered that bars to be error-corrected are concentrated in a double-printing portion (on the side of the print starting position of all of the bar codes).

FIGS. 7A and 7B are diagrams showing examples of bar code images (fluorescent images read by the fluorescent scanner 13) in a state in which two bar codes having different total lengths are overprinted (double-printed). However, in FIGS. 7A and 7B, in order to make it possible to easily and visually observe the state in which two bar codes are overprinted, a first bar code configured by a plurality of bars is shown in black and a second bar code configured by a plurality of bars is indicated by oblique lines.

In FIG. 7A, an example of a bar code image in which a first bar code configured by a plurality of bars and a second bar code configured by bars of a number less than that of bars of the first bar code are overprinted is shown. In the example of FIG. 7A, the bars of the bar codes are printed in an order starting from the right end of the bar code set as a preset print starting position. In the bar code image shown in FIG. 7A, part of the bars configuring the first bar code and part of the bars configuring the second bar code are overprinted.

The bar detecting portion 21 detects two bars overprinted as one bar in the bar code image shown in FIG. 7A. Therefore, when the first bar code is used as a reference, those of the bars configuring the first bar code on which the bars of the second bar code are overprinted to change the lengths thereof will be erroneously detected. Further, in the bar code image shown in FIG. 7A, those of the bars which lie on the left side of the first bar code (the bars on which the bars of the second bar code are not overprinted) are correctly detected by the bar detecting portion 21.

That is, the bar detecting portion 21 acquires the detection result of the first bar code in a state in which the right end bar and the bars on which the bars of the second bar code are overprinted to change the lengths thereof are erroneously detected in the bar code image shown in FIG. 7A. In the example shown in FIG. 7A, a large number of bars mainly lying in a region of the left side portion of the first bar code are correctly detected as plural bars configuring part of the first bar code. Therefore, the decoding portion 22 corrects those of the bars on which the bars of the second bar code are overprinted and which are set in an erroneously detected state as the detection result of the first bar code by performing an error correcting process by use of an error correction code of the first bar code.

FIG. 7B shows bars to be corrected as errors when the first bar code is used as a reference in the bar code image of FIG. 7A. That is, in the example shown in FIG. 7B, the bars to be corrected as errors are those of the bars configuring the first bar code on which the bars of the second bar code are overprinted to change the lengths thereof. Therefore, it can be estimated that the region in which the error-corrected bars are concentrated is a region in which a plurality of bar codes are overprinted. That is, in the second double-printing detecting process, much attention is paid to the fact that error-corrected bars are concentrated in the region in which a plurality of bar codes are overprinted.

Further, as shown in FIG. 7B, an error-corrected portion appears in a region corresponding to the bar code whose total length is smaller with the print starting position set as a reference when two bar codes having different total lengths (different numbers of bars) are double-printed on the assumption that the total length of the bar code (the number of bars) is variable and the print starting positions of the respective bar codes are constant. With attention paid to this point, it can be estimated that a possibility that two bar codes with different total lengths (different numbers of bars) are double-printed if a large number of error corrections occur in a region on the print starting position side (in the first half portion of the bar code) and a small number of error corrections occur in a region on the side opposite to the print starting position (in the second half portion of the bar code).

In the configuration shown in FIG. 2, it is supposed that the bar code recognizing portion 12 to which the second double-printing detecting process is applied is so configured that the bar detection result and the error correction result (information indicating the error-corrected bar) may be supplied from the decoding portion 22 to the double-printing detecting portion 23. Further, in the present embodiment, as shown in FIG. 7A, the bar code attached to the paper sheet is formed based on the assumption that bars are sequentially printed from the right side with the preset position of the paper sheet set as a reference. Therefore, in the second double-printing detecting process described below, it is supposed that the right end of the bar code is the print starting position of the bar code.

Next, the flow of the double-printing detecting process (second double-printing detecting process) based on the positions of error-corrected bars is explained.

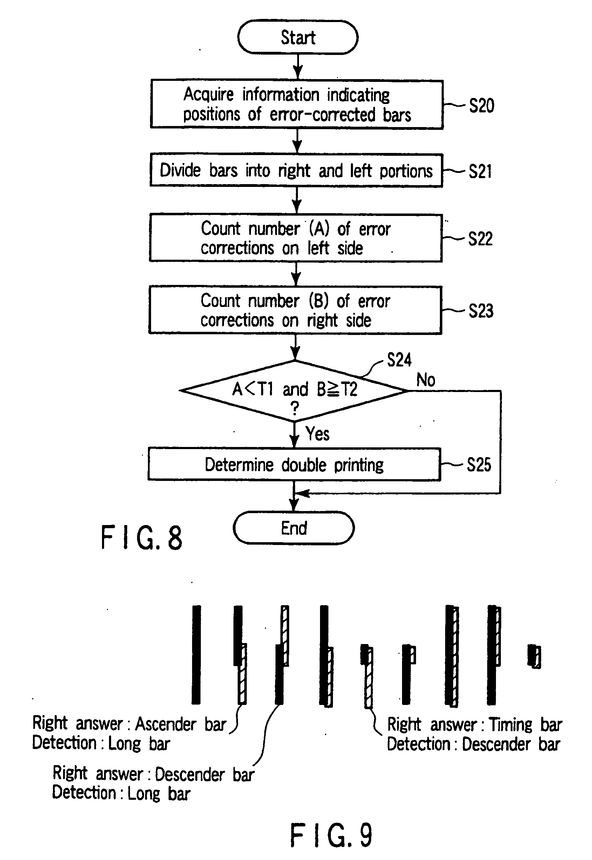

FIG. 8 is a flowchart for schematically illustrating the flow of the second double-printing detecting process.

As described above, the second double-printing detecting process determines whether a double-printing state occurs or not according to whether or not the number of positions of error-corrected bars is relatively larger on the bar code print starting position side (on the right side in the example shown in FIG. 7A) on the assumption that the bar code print starting position is substantially constant and the total length of the bar code (the number of bars) is variable. That is, the second double-printing detecting process determines whether the distribution of positions of error-corrected bars seems to indicate a double-printing state or not. Various methods are considered as the method for determining whether the distribution of positions of error-corrected bars seems to indicate a double-printing state or not. In this example, as an example of the double-printing detecting process based on the positions of error-corrected bars, a double-printing detecting process is explained which divides the whole portion of a detected bar code into right and left regions and determines whether a double-printing state occurs or not based on the number of error corrections in the left region (the second half portion of the bar code) and the number of error corrections in the right region (the first half portion of the bar code).

That is, the double-printing detecting portion 23 acquires information indicating the positions of all of the bars detected by the bar detecting portion 21 and information indicating the positions of error-corrected bars from the decoding portion 22 (step S20). After acquiring the above information items from the decoding portion 22, the double-printing detecting portion 23 divides the whole portion of the bar code configured by all of the detected bars into a left-side region (bar group on the left side) used as the second half portion of the bar code and a right-side region (bar group on the right side) used as the first half portion of the bar code (step S21).

If the whole portion of the bar code (all of the detected bars) is divided into the right and left regions, the double-printing detecting portion 23 determines the number (A) of error-corrected bars in the left-side region (step S22). Likewise, the double-printing detecting portion 23 determines the number (B) of error-corrected bars in the right-side region (step S23). After the numbers (A and B) of bars in the left and right regions are determined, the double-printing detecting portion 23 determines whether or not the number (A) of error-corrected bars in the left-side region is smaller than a preset first threshold value (T1) and the number (B) of error-corrected bars in the right-side region is not smaller than a preset second threshold value (T2) (step S29).

The first threshold value (T1) is a threshold value used to determine that the number of error-corrected bars in the second half portion of the bar code with the bar code print starting position set as a reference is less than a preset value. The second threshold value (T2) is a threshold value used to determine whether or not the number of error-corrected bars in the first half portion of the bar code with the bar code print starting position set as a reference is equal to or larger than the preset value. The second threshold value (T2) is a threshold value larger than at least the first threshold value (T1).

That is, the first and second threshold values are used to determine whether or not the percentage of the number of bars which are determined as errors (bars determined as error detection) in the first and second half portions of the bar code with the print starting position set as a reference is higher than a preset percentage. Therefore, for example, the first and second threshold values are values to be set according to the degree of variation in the total lengths of the respective bar codes (the numbers of bars) in the operation. That is, the first and second threshold values are adequately set according to the specification of bar codes or the operating condition.

When it is determined in the above determination process that the number (A) of error-corrected bars in the left-side region is smaller than the preset first threshold value (T1) and the number (B) of error-corrected bars in the right-side region is not smaller than the preset second threshold value (T2) ("YES" in the step S24), the double-printing detecting portion 23 determines that bar codes are double-printed (step S25). In other cases (for example, when the number (A) of error-corrected bars is not smaller than the preset first threshold value (T1) or when the number (B) of error-corrected bars is smaller than the preset second threshold value (T2)) ("NO" in the step S24), the double-printing detecting portion 23 determines that the double-printing state of bar codes is not detected in the double-printing detecting process based on the positions of error-corrected bars.

As described above, in a case where the total lengths of bar codes (the numbers of bars) are variable and the printing positions of the respective bar codes can be specified in the double-printing detecting process of bar codes based on the positions of error-corrected bars, whether a plurality of bar codes are overprinted or not is determined based on the distribution of bars corrected (bars determined as error detections) in the error correction process. Thus, in the second double-printing detecting process, it can be detected that two bar codes are double-printed even if they are overprinted without causing substantially any positional shift.

Next, the third double-printing detecting process as the double-printing detecting process is explained.

The third double-printing detecting process is a process for detecting a double-printing state of bar codes by paying attention to the types of error-corrected bars (the double-printing detecting process based on the types of error-corrected bars). In the third double-printing detecting process, whether a plurality of bar codes are overprinted or not is determined based on what type of bar is corrected into what type of bar by the error correction process.

When a plurality of bar codes having a plurality of bars arranged at substantially the same intervals are printed starting from substantially the same position, the respective bars of the bar codes are overprinted. For example, when bars configuring a first bar code and bars configuring a second bar code are overprinted, the bar detecting portion 21 detects one bar code configured by the bars that are overprinted. In this case, the types of the bars configuring the first bar code (the lengths of the bars) may vary depending on the types of the bars configuring the second bar code overprinted with the first bar code set as a reference. For example, bars whose lengths are changed by bars overprinted thereon are detected as bars of the type longer than the type of original bars. On the other hand, bars whose lengths are kept unchanged even if bars are overprinted thereon are detected as the type of original bars on which the bars of the second bar code are overprinted.

That is, when the bars configuring the first bar code and the bars configuring the second bar code are overprinted, the number of bars erroneously detected as long bars tends to become larger.

With attention paid to this point, in the third double-printing detecting process, whether a plurality of bar codes are overprinted or not is determined based on the number of bars corrected from long bars to short bars by analyzing the result of error corrections.

FIG. 9 is a diagram showing an example of a bar code image (a fluorescent image read by the fluorescent scanner 13) in a state in which the bars configuring the first bar code and the bars configuring the second bar code are overprinted (double-printed).

In FIG. 9, in order to make it possible to easily and visually observe the state in which the bars of the two bar codes are overprinted, the bars configuring the first bar code are shown in black and the bars configuring the second bar code are indicated by oblique lines. Further, in FIG. 9, the correction result of bars by the error correction process based on an error correction code of the first bar code (that is, the error correction process with the first bar code set as a reference) is shown.

As shown in FIG. 9, the bars corrected by the error correction process are those of the bars configuring the first bar code on which the bars configuring the second bar code are overprinted and whose lengths are changed. That is, when the bars configuring the second bar code are overprinted on the bars configuring the first bar code, a specified trend appears on bars erroneously detected due to double printing, that is, bars corrected by the error correction process.

For example, in the four-state bar code expressed by four types of bars as shown in FIG. 3, it is considered that the following error detection occurs due to double printing.

When a long bar or descender bar is overprinted on an ascender bar, the ascender bar is erroneously detected as a long bar. On the other hand, when an ascender bar or timing bar is overprinted on an ascender bar, the ascender bar is not erroneously detected and is detected as an ascender bar.

When a long bar or ascender bar is overprinted on a descender bar, the descender bar is erroneously detected as a long bar. On the other hand, when a descender bar or timing bar is overprinted on a descender bar, the descender bar is not erroneously detected and is detected as a descender bar.

A timing bar is erroneously detected as a long bar when a long bar is overprinted thereon, erroneously detected as an ascender bar when an ascender bar is overprinted thereon and erroneously detected as a descender bar when a descender bar is overprinted thereon. On the other hand, when a timing bar is overprinted thereon, the timing bar is not erroneously detected and is detected as a timing bar.

A long bar is not erroneously detected and is detected as a long bar even if any type of bar is overprinted thereon.

When attention is paid to the above trend of erroneous detection caused by double printing, a bar erroneously detected by double printing is a bar obtained by correction from a long bar to a short bar. For example, in the four-state bar code, it is estimated that the correction result of a bar erroneously detected by double printing becomes one of the following results (3-1) to (3-5).

(3-1) Bar corrected from long bar to ascender bar
(3-2) Bar corrected from long bar to descender bar
(3-3) Bar corrected from long bar to timing bar
(3-4) Bar corrected from ascender bar to timing bar
(3-5) Bar corrected from descender bar to timing bar

Therefore, it is estimated that the error-corrected bars as indicated by the results (3-1) to (3-5) may be bars that are erroneously detected by double printing with high possibility.

It becomes possible to determine the presence or absence of double printing of bar codes based on the error correction result by specifying the trend of error correction for erroneous detection caused by overprinting. That is, in the third double-printing detecting process, the presence or absence of double printing of bar codes is determined based on the number of error-corrected bars (bars corrected from long bars to short bars) by use of an error correction pattern for erroneous detection caused by overprinting. For example, as an example of the third double-printing detecting process, it is possible to determine whether bar codes are double-printed or not based on whether or not the ratio of the number of bars corrected from long bars to short bars to the total number of corrected bars is equal to or larger than a preset threshold value. Thus, in the third double-printing detecting process, the double-printing state can be detected even if two bar codes are overprinted without causing substantially any positional shift.

In the configuration as shown in FIG. 2, the bar code recognizing portion 12 to which the third double-printing detecting process is applied is configured to supply the bar detection result and error correction result (information indicating the type of a bar before error correction and the type of a bar after error correction) from the decoding portion 22 to the double-printing detecting portion 23.

Next, the flow of the double-printing detecting process (third double-printing detecting process) based on the type of error-corrected bars is explained.

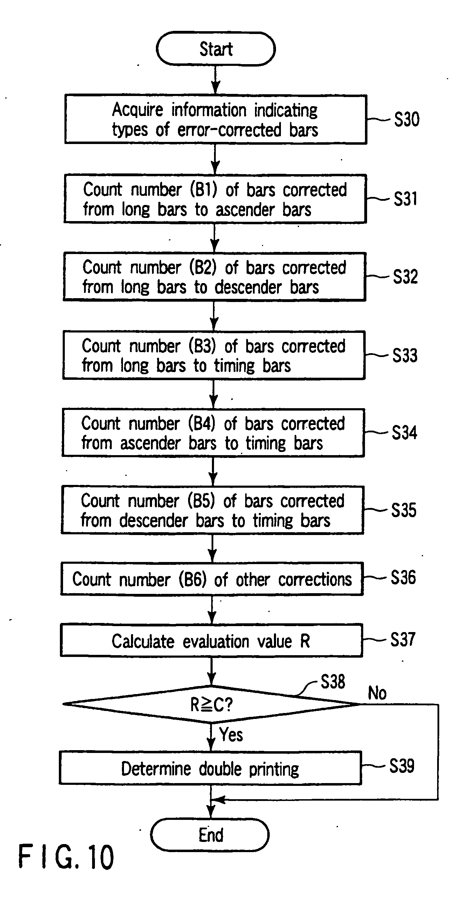

FIG. 10 is a flowchart for schematically illustrating the flow of the third double-printing detecting process.

As described above, the third double-printing detecting process is based on the fact that bars configuring a plurality of bar codes are overprinted without any positional shift. That is, in the third double-printing detecting process, it is supposed that the bar codes are double-printed with the print starting positions of two bar codes and the pitches of the bars set at substantially the same in a state in which substantially no positional shift occurs in a direction perpendicular to the arrangement direction of the bars (for example, a state in which the same type of overprinted bars will not be erroneously detected).

The third double-printing detecting process determines whether or not the types of error-corrected bars seem to be types of double-printed bars. As a method for determining whether or not the double-printing state seems to occur based on the types of error-corrected bars, various methods are considered. In this case, as an example of the double-printing detecting process based on the types of error-corrected bars, a method for determining the double-printing state based on the ratio of the total number of error-corrected bars to the number of bars corrected from long bars to short bars is explained. Further, in the following explanation, it is supposed that the four-state bar code is used as a bar code.

That is, the double-printing detecting portion 23 acquires information items indicating the types of bars before and after correction among all of the error-corrected bars as the result of the error correction process by the decoding portion 22 (step S30). When acquiring the information items from the decoding portion 22, the double-printing detecting portion 23 counts the number (B1) of bars corrected from long bars to ascender bars, the number (B2) of bars corrected from long bars to descender bars and the number (B3) of bars corrected from long bars to timing bars among the error-corrected bars (steps S31, S32, S33).

Likewise, the double-printing detecting portion 23 counts the number (B4) of bars corrected from ascender bars to timing bars and the number (B5) of bars corrected from descender bars to timing bars among the error-corrected bars based on the error correction result (steps S34, S35). Further, the double-printing detecting portion 23 counts the number (B6) of bars other than the numbers B1 to B5 of bars.

When counting the numbers B1 to B6, the double-printing detecting portion 23 calculates an evaluation value R indicating the ratio of the number (B1+B2+B3+B9+B5) of bars corrected from long bars into short bars to the total number (B1+B2+B3+B9+B5+B6) of corrected bars. For example, the evaluation value R is calculated based on the following equation.

$$R = (B1+B2+B3+B4+B5)/(B1+B2+B3+B4+B5+B6)$$

That is, the evaluation value R indicates the ratio of the number of bars corrected from long bars into short bars to the total number of corrected bars. For example, as shown in FIG. 9, it is considered that all of the corrections are made to correct long bars to short bars if only erroneous correction caused by double printing is corrected. However, it is generally considered that error correction is made for normal erroneous detection that is not caused by double printing. Therefore, a threshold value C that is set by taking the number of bar corrections due to normal erroneous detections into consideration is previously set in the double-printing detecting portion 23 and the presence or absence of double printing is determined according to whether or not the evaluation value R is not smaller than the threshold value C (step S38).

When it is determined in the above determination step that the evaluation value R is not smaller than the threshold value C ("YES" in the step S38), the double-printing detecting portion 23 determines that bar codes are double-printed (step S39). Further, when it is determined in the above determination step that the evaluation value R is smaller than the threshold value C ("NO" in the step S38), the double-printing detecting portion 23 determines that the double-printing state of bar codes which can be detected by the present system is not set.

The threshold value C may be adequately set according to the specification of bar codes and the operating condition of the sorting system. For example, it is considered to set large the threshold value C in a system having high precision of detection of bars configuring a bar code in a normally printed state (in the operating condition in which the number of erroneous detections of bars is small) and set small the threshold value C in a system having low bar detection precision (generally, in the operating condition in which the number of erroneous detections of bars is large). Further, the threshold value C may be variably set to a value corresponding to the ratio (correction ratio) of the number of corrected bars to the total number of bars.

Further, in the above process example, even when the number of corrected bars is extremely small, the double printing state of bar codes is detected based on the evaluation value R. For example, when the number of bars corrected from long bars into short bars is one in the entire portion of the bar code, the evaluation value (ratio) R becomes the maximum. However, in the third double-printing detecting process, basically, it is assumed that a certain number of bars are corrected when bar codes are double-printed. Therefore, the third double-printing detecting process may be performed when the ratio (correction ratio) of the number of corrected bars to the total number of bars is equal to or higher than a preset value. Thus, when the number of corrected bars is extremely small, it is possible not to perform the double-printing process of bar codes.

As described above, in the double-printing detecting process based on the type of error-corrected bars (third double-printing detecting process), the presence or absence of double printing of bar codes is determined based on the number of error-corrected bars (bars corrected from long bars into short bars) by use of an error-correction pattern for error detection caused by overprinting. As a result, in the third double-printing detecting process, a double-printing state can be detected even if two bar codes are overprinted without substantially any positional shift.

Next, a fourth double-printing detecting process is explained as a double-printing detection process for bar codes in the double-printing detecting portion 23.

The fourth double-printing detecting process is a process of detecting a double-printing state of bar codes by paying attention to the lengths of bars configuring a bar code (a double-printing detecting process based on the bar length). The fourth double-printing detecting process is to detect a state in which a plurality of bar codes are overprinted with the bar codes shifted in a direction (the lengthwise direction of each bar) perpendicular to the arrangement direction of bars configuring the bar code.

That is, when the print starting positions in the arrangement direction of bars are set in the same position (or shifted by integral multiples of the pitch of the bars) and the first and second bar codes having substantially the same pitches of bars are shifted and printed in the lengthwise direction of the bars, there occurs a strong possibility that bars of length exceeding the normal prescribed length are detected. For example, if long bars of the first and second bar codes are overprinted with a shift in the lengthwise direction, the overprinted long bars are detected as a bar that is longer than a normal long bar by an amount by which the bar is shifted and printed in the lengthwise direction. By paying attention to the above phenomenon, in the fourth double-printing detecting process, the presence or absence of double printing of bar codes is determined according to whether a bar having length larger than the preset maximum value as the length of a normally printed bar is detected or not.

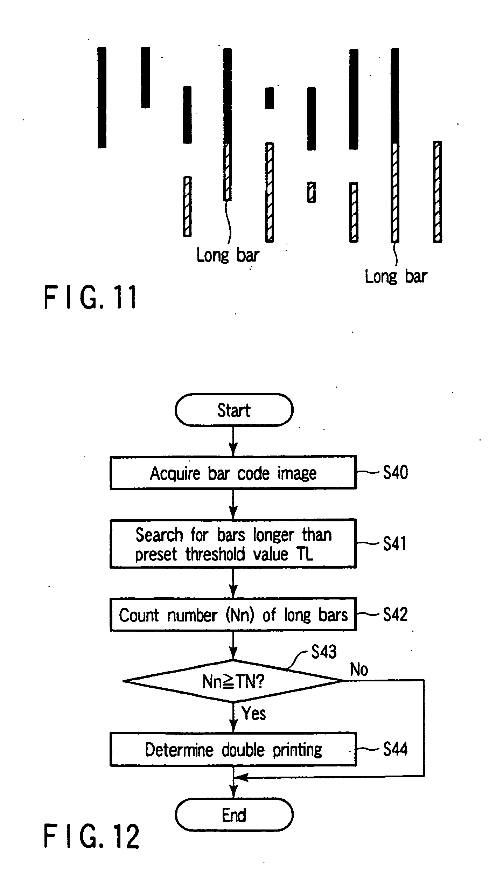

FIG. 11 is a diagram showing an example of a bar code image (a fluorescent image read by the fluorescent scanner 13) in which two bar codes are overprinted (double-printed). FIG. 11 shows an example of a bar code image in which the print starting positions in the bar arrangement direction are substantially the same (or shifted by integral multiples of the pitch of the bars) and the first and second bar codes having substantially the same pitches of bars (bar intervals) are shifted in the vertical direction and double-printed. In this case, in the sorting system shown in FIGS. 1 and 2, all of the bars configuring the bar codes are detected as a fluorescent image. However, in FIG. 11, in order to make it possible to easily and visually observe the state in which two bar codes are double-printed, bars configuring a first bar code are shown in black and bars configuring a second bar code are indicated by oblique lines.

In the example shown in FIG. 11, some of the bars configuring the first bar code are connected to the bars configuring the second bar. For example, the first bar code contains a long bar connected to a long bar of the second bar code. Further, the first bar code contains a long bar connected to an ascender bar of the second bar code. In the four-state bar code, the long bar is the longest bar. Therefore, a bar that is longer than the long bar is not detected in a normally printed bar code. However, as shown in FIG. 11, the long bar connected to the bar of the second bar code is detected as a bar longer than a normal long bar. Further, there also occurs a possibility that the bar of the first bar code connected to the long bar of the second bar code is detected as a bar longer than the normal long bar.

That is, when a bar longer than a bar whose length becomes the maximum is detected, it can be estimated that there occurs a strong possibility that a double-printing state in which a plurality of bar codes are overprinted with a shift in a direction perpendicular to the bar arrangement direction occurs. With attention paid to the above point, in the fourth double-printing detecting process, the maximum value of the length to which normally printed bars can be set is set as a threshold value TL and whether bar codes are double-printed or not is determined according to whether bars equal to or longer than the threshold value TL are present or not. However, since the bar length may be erroneously detected, whether the double-printing state is set or not is determined according to whether or not the number of bars equal to or longer than the threshold value TL is not smaller than a preset threshold value TN in a process example as will be described later.

Next, the flow of the double-printing detecting process based on the lengths of bars (fourth double-printing detecting process) is explained.

FIG. 12 is a flowchart for schematically illustrating the flow of the double-printing detecting process based on the lengths of respective bars.

As described above, a fluorescent image (bar code image) read by the fluorescent scanner 13 is supplied to the double-printing detecting portion 23 (step S40). When acquiring a bar code image read by the fluorescent scanner 13, the double-printing detecting portion 23 searches for bars whose lengths are equal to or larger than the preset threshold value TL in the bar code image (step S41). When a bar longer than the threshold value TL is thus detected, the double-printing detecting portion 23 counts the number (N) of bars whose lengths are equal to or larger than the preset threshold value TL (step S42).

When terminating the process of searching for bars whose lengths are equal to or larger than the preset threshold value TL in the bar code image, the double-printing detecting portion 23 determines whether or not the number (N) of bars whose lengths are equal to or larger than the preset threshold value TL is set equal to or larger than the preset threshold value TN (step S43). When it is determined in the above determining process that the number (N) of bars whose lengths are equal to or larger than the preset threshold value TL is set equal to or larger than the preset threshold value TN ("YES" in the step S43), the double-printing detecting portion, 23 determines that bar codes are double-printed in the bar code image (step S44). Further, when it is determined in the above determining process that the number (N) of bars whose lengths are equal to or larger than the preset threshold value TL is less than the preset threshold value TN ("NO" in the step S43), the double-printing detecting portion 23 determines that a double-printing state of bar codes that can be detected by the present system does not occur.

As described above, in the double-printing detecting process based on the lengths of bars (fourth double-printing detecting process), the number of bars whose lengths are larger than the preset maximum value is detected and the presence or absence of double printing of bar codes is determined according to whether or not the number of bars whose lengths are larger than the preset maximum value is equal to or larger than the preset threshold value. Thus, in the fourth double-printing detecting process, it becomes possible to easily detect a plurality of bar codes overprinted without any shift in the bar arrangement direction and with a shift in a direction (lengthwise direction of bars) perpendicular to the bar arrangement direction as double-printed bar codes.

Next, a fifth double-printing detecting process as the double-printing detecting process for bar codes in the double-printing detecting portion 23 is explained.

The fifth double-printing detecting process is a process of detecting a double-printing state of bar codes by paying attention to the positions of the end points of bars configuring a bar code (a double-printing detecting process based on the end points of respective bars). The fifth double-printing detecting process is a process for detecting a plurality of bar codes overprinted with a shift in a direction (lengthwise direction of bars) perpendicular to the arrangement direction of bars configuring the bar codes.

That is, in the bar codes which are normally printed without being overprinted, the end points of the bars are concentrated in a preset number of positions in the lengthwise directions of the bars. In other words, in the normally printed bar codes, the end points of the bars are present on a preset number of straight lines parallel to the arrangement direction of the bars. For example, the four-state bar code shown in FIG. 3 is configured by four types of bars. Therefore, the end points of the bars of the four-state bar code are present on any one of the four straight lines parallel to the bar arrangement direction in the normally printed state. By paying attention to the above phenomenon, in the fifth double-printing detecting process, the presence or absence of double printing of bar codes is determined according to whether the end points of the bars are present on a preset number of straight lines parallel to the bar arrangement direction.

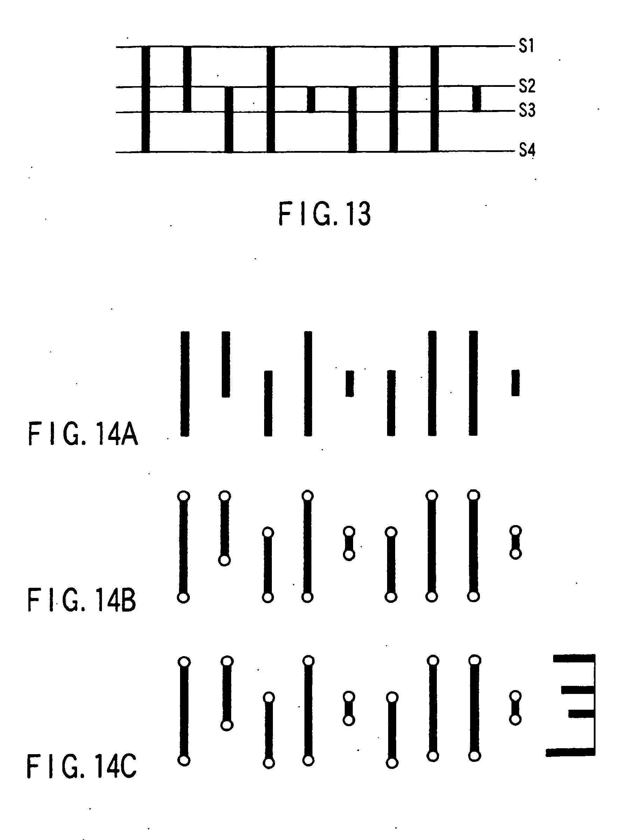

FIG. 13 is a diagram, showing an example of a bar code image (a fluorescent image read by the fluorescent scanner 13) of a four-state bar code correctly printed. As shown in FIG. 13, in the four-state bar code correctly printed, the end points of the bars of the four-state bar code are present on any one of the four straight lines S1, S2, S3, S4 parallel to the arrangement direction of the bars. For example, one of the end points of a long bar (the upper-side end point in FIG. 13) lies on the straight line S1 and the other end point thereof (the lower-side end point in FIG. 13) lies on the straight line S4. One of the end points of an ascender bar (the upper-side end point in FIG. 13) lies on the straight line S1 and the other end point thereof (the lower-side end point in FIG. 13) lies on the straight line S3. One of the end points of a descender bar (the upper-side end point in FIG. 13) lies on the straight line S2 and the other end point thereof (the lower-side end point in FIG. 13) lies on the straight line S4. Further, one of the end points of a timing bar (the upper-side end point in FIG. 13) lies on the straight line S2 and the other end point thereof (the lower-side end point in FIG. 13) lies on the straight line S3.

Thus, when a different bar code is overprinted with a shift in the lengthwise direction (vertical direction in FIG. 13) of the bars, a bar having an end point set in a position other than the four straight lines S1 to S4 appears. In other words, when a different bar code is overprinted with a shift in the lengthwise direction (vertical direction in FIG. 13) of the bars, five or more straight lines are necessary in order to connect the end points of the bars by use of straight lines parallel to the bar arrangement direction. That is, the double-printing state of bar codes is determined according to whether the number of positions of the end points of the bars is set to four or more in a direction (lengthwise direction of the bars) perpendicular to the bar arrangement direction.

FIG. 14A is a diagram showing an example of a bar code in a correctly printed state. FIG. 14B is a diagram showing the end points of respective bars configuring the bar code shown in FIG. 14A. FIG. 14C is a diagram showing projection values of the end points of the bars shown in FIG. 14B in a direction (the lengthwise direction of the bar) perpendicular to the arrangement direction of the respective bars.

As shown in FIG. 14C, in the bar code in the correctly printed state, the projection values of the end points of the bars in the lengthwise direction of the bars give four peaks. On the other hand, if a bar whose end point position is set in a position different from the peaks shown in FIG. 14C is present, it can be estimated that the bar code is a bar code which is not correctly printed. That is, if the bar codes are overprinted with a shift in the vertical direction (the direction perpendicular to the bar arrangement direction), the number of peaks of projection values as shown in FIG. 14C becomes five or more.

Next, the flow of the double-printing detecting process based on the end points of the bars (the fifth double-printing detecting process) is explained.

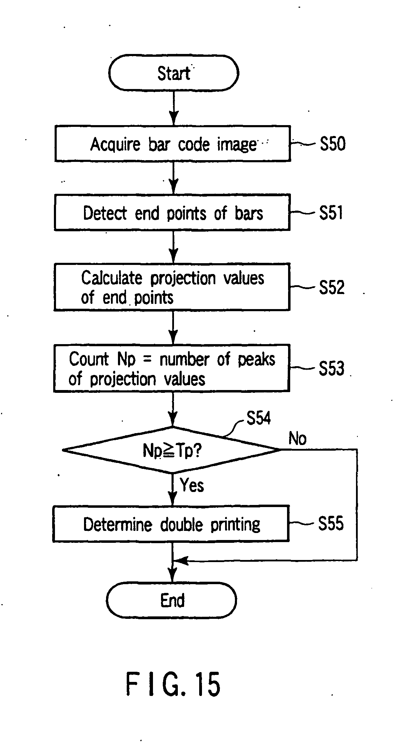

FIG. 15 is a flowchart for schematically illustrating the flow of the double-printing detecting process based on the end points of the respective bars.

In this example, as an example of the fifth double-printing detecting process, a process of taking projection values of the end points of the bars in the lengthwise direction of the bars and determining the presence or absence of a double-printing state of bar codes according to whether or not the number of peaks of the projection values is equal to or larger than a preset threshold value ("5" in the four-state bar code) is explained.

That is, the double-printing detecting portion 23 is supplied with a fluorescent image (bar code image) read by the fluorescent scanner 13 (step S50). When acquiring the bar code image read by the fluorescent scanner 13, the double-printing detecting portion 23 detects end points of bars in the bar code image (step S51). When detecting the end points of the respective bars, the double-printing detecting portion 23 determines the positions of the end points of the bars in a direction (the lengthwise direction of the bars) perpendicular to the arrangement direction of the bars. The double-printing detecting portion 23 calculates projection values of the end points of the bars in the lengthwise direction of the bars based on the above determination result (step S52).

When calculating the projection values of the respective end points of the bars, the.double-printing detecting portion 23 counts the number (Np) of peaks based on the projection values (step S53). After counting the number (Np) of peaks of the projection values, the double-printing detecting portion 23 determines whether or not the number (Np) of peaks is equal to or larger than a preset threshold value (Tp) corresponding to the type of bars configuring the bar code (the specification of the bar code) (step S54). When it is determined in the above determining process that the number (Np) of peaks is equal to or larger than the preset threshold value (Tp) ("YES" in the step S54), the double-printing detecting portion 23 determines that a plurality of bar codes are overprinted (step S55). Further, when it is determined in the above determining process that the number (Np) of peaks is smaller than the preset threshold value (Tp) ("NO" in the step S54), the double-printing detecting portion 23 determines that a double-printing state which can be detected by the present system is not detected.

The threshold value Tp is a value set according to the type of bars configuring the bar code (the specification of the bar code). For example, in the four-state bar code expressed by four types of bars as shown in FIG. 3, as described above, four peaks appear in the normally printing state and five or more peaks appear in the double-printing state. Therefore, when the four-state bar code of the specification as shown in FIG. 3 is used as the bar code, "5" is set as the threshold value Tp.

As described above, in the double-printing detecting process based on the end points of bars (fifth double-printing detecting process), the presence or absence of double printing of bar codes is determined according to whether the positions of the end points of all of the bars are concentrated in a preset number of portions in a direction perpendicular to the bar arrangement direction. Thus, in the fifth double-printing detecting process, it is possible to easily detect a plurality of bar codes overprinted with a shift in a direction (a lengthwise direction of the bar) perpendicular to the bar arrangement direction as double-printed bar codes even if a shift (a shift in the print starting positions or a shift in the pitches of bars) does not occur in the bar arrangement direction.

As described above, in the present embodiment, the five methods are explained as the method for detecting the double-printing state of bar codes. Each of the above methods is a processing method capable of independently detecting the double-printing state of bar codes. However, it is supposed that the optimum methods for detecting the double-printing state of bar codes are different depending on the way a plurality of bar codes are overprinted.

For example, the first double-printing detecting process is suitable for detecting the double-printing state of bar codes when a plurality of bar codes having different bar intervals are overprinted.

Further, the second and third double-printing detecting processes are suitable for detecting the double-printing state of bar codes when no shift occurs in the printing positions of bars configuring a plurality of bar codes, that is, when the bars of the bar codes are overprinted. Particularly, in the second double-printing detecting process, the double-printing state of bar codes can be detected based on simple processing contents when two bar codes with different total lengths (different numbers of bars) are overprinted. Further, in the third double-printing detecting process, the double-printing state of bar codes can be detected if an error correction code attached to any one of the bar codes can be detected even in a case where the total lengths of the two bar codes are not greatly different from each other.

The fourth and fifth double-printing detecting processes are suitable for detecting the double-printing state of bar codes when a plurality of bar codes are overprinted with a shift in a direction perpendicular to the bar arrangement direction. Particularly, in the fourth double-printing detecting process, the double-printing state of bar codes can be detected based on simple processing contents when shift amounts of bar codes in the direction perpendicular to the bar arrangement direction are large. Further, in the fifth double-printing detecting process, the double-printing state of bar codes can be detected even if shift amounts of bar codes in the direction perpendicular to the bar arrangement direction are small.

Therefore, in the double-printing detecting portion 23, the double-printing state of bar codes set in various states can be detected by performing a double-printing detecting process obtained by combining all or part of the five double-printing detecting methods. For example, the double-printing state of bar codes can be efficiently detected with high precision by performing a combination of the first, second and third double-printing detecting processes if it is assumed that printing shift amounts in the direction perpendicular to the bar arrangement direction are small or it is assumed that a shift in the printing positions other than the bar intervals is small (the bars of the bar codes are overprinted) as the operating condition.

In the above embodiments, the explanation is mainly made based on the assumption that the double-printing states of bar codes attached to paper sheets are detected. However, the above embodiments are not limited to detection of the double-printing states of bar codes attached to paper sheets. That is, the above embodiments can be applied as a method for detecting the double-printing states of bar codes attached to general articles. For example, when a bar code is attached to a tag provided on an article for article management, it is considered that the article management can be efficiently performed with high precision by detecting the double-printing states of bar codes by use of the above methods.

**Claims**

1. A bar code processing apparatus comprising:

an image acquiring portion (20) that acquires an image containing a bar code,
a bar detecting portion (21) that detects a plurality of bars configuring a bar code based on the image acquired by the image acquiring portion,
a decoding portion (22) that recognizes information indicated by the bar code configured by the bars based on states of the bars detected by the bar detecting portion,
an overprinting detecting portion (23) that determines whether a plurality of bar codes are overprinted or not based on states of the bars detected by the bar detecting portion (21), and
a determining portion (24) that determines that a result of recognition of the bar code by the decoding portion (22) is invalid information when the overprinting detecting portion (23) detects that a plurality of bar codes are overprinted and outputs a result of recognition of the bar code by the decoding portion as valid information when the overprinting detecting portion (23) does not detect that a plurality of bar codes are overprinted.

2. The bar code processing apparatus according to claim 1, wherein the overprinting detecting portion (23) determines whether or not a plurality of bar codes are overprinted by detecting, based on intervals of the bars detected by the bar detecting portion (21), whether there are two or more bar groups having different frequencies.

3. The bar code processing apparatus according to claim 1, wherein the overprinting detecting portion (23) determines whether or not a plurality of bar codes are overprinted based on positions of error-corrected bars, the error correction being made by the decoding portion (22).

4. The bar code processing apparatus according to claim 1, wherein the overprinting detecting portion (23) determines whether a plurality of bar codes are overprinted or not based on the number of bars which are corrected from long bars into short bars by use of the error correction made by the decoding portion (22).

5. The bar code processing apparatus according to claim 1, wherein the overprinting detecting portion (23) determines whether a plurality of bar codes are overprinted or not based on the number of bars whose lengths are equal to or larger than a preset maximum value, the bars being in a direction perpendicular to an arrangement direction of a plurality of bars configuring the bar code acquired as an image by the image acquiring portion (20).

6. The bar code processing apparatus according to claim 1, wherein the overprinting detecting portion (23) determines whether a plurality of bar codes are overprinted or not based on the end points of bars, the bars being in a direction perpendicular to an arrangement direction of a plurality of bars configuring the bar code acquired as an image by the image acquiring portion (20).

7. A sorting apparatus that sorts articles based on sorting information, comprising:

a scanner (13) that reads an image containing a bar code printed on an article,
a bar detecting portion (21) that detects a plurality of bars configuring a bar code based on the image read by the scanner,
a decoding portion (22) that recognizes information indicated by the bar code configured by the bars based on states of the bars detected by the bar detecting portion,
an overprinting detecting portion (23) that determines whether a plurality of bar codes are overprinted or not based on states of the bars detected by the bar detecting portion (21),
a determining portion (24) that determines that information recognized by the decoding portion (22) is invalid information when the overprinting detecting portion (23) detects that a plurality of bar codes are overprinted and determines a result of recognition of the bar code by the decoding portion (22) as valid sorting information of the article when the overprinting detecting portion (23) does not detect that a plurality of bar codes are overprinted,
and a sorting portion (17) that sorts the article based on the recognition result of the bar code determined as the sorting information of the article by the determining portion.

8. The sorting apparatus according to claim 7, wherein the overprinting detecting portion (23) determines whether or not a plurality of bar codes are overprinted by detecting, based on intervals of the bars detected by the bar detecting portion (21), whether there are two or more bar groups having different frequencies.

9. The sorting apparatus according to claim 7, wherein the overprinting detecting portion (23) determines whether or not a plurality of bar codes are overprinted based on positions of error-corrected bars, the error correction being made by the decoding portion (22).

10. The sorting apparatus according to claim 7, wherein the overprinting detecting portion (23) determines whether a plurality of bar codes are overprinted or not based on the number of bars which are corrected from long bars into short bars by use of the error correction made by the decoding portion (22).

11. The sorting apparatus according to claim 7, wherein the overprinting detecting portion (23) determines whether a plurality of bar codes are overprinted or not based on the number of bars whose lengths are equal to or larger than a preset maximum value, the bars being in a direction perpendicular to an arrangement direction of a plurality of bars configuring the bar code acquired as an image by the image acquiring portion (20).

12. The sorting apparatus according to claim 7, wherein the overprinting detecting portion (23) determines whether a plurality of bar codes are overprinted or not based on the end points of bars, the bars being in a direction perpendicular to an arrangement direction of a plurality of bars configuring the bar code acquired as an image by the image acquiring portion (20).

13. A bar code processing method used in a bar code processing apparatus, comprising the steps of:

acquiring an image containing a bar code,
detecting a plurality of bars configuring a bar code based on the thus acquired image,
recognizing information indicated by the bar code configured by the bars based on states of the detected bars,
performing an overprinting detecting process to determine whether a plurality of bar codes are overprinted or not based on states of the detected bars,
determining that a result of recognition of the bar code is invalid information when it is detected by the overprinting detecting process that a plurality of bar codes are overprinted, and
outputting a result of recognition of the decoded bar code as valid information when it is not detected by the overprinting detecting process that a plurality of bar codes are overprinted.

**Patentansprüche**

1. Strichcode-Verarbeitungsgerät, umfassend:

einen Bild-Erlangteil (20), der ein Bild erlangt, das einen Strichcode enthält,
einen Strich-Erfassungsteil (21), der eine Vielzahl von Strichen erfasst, die einen Strichcode formen, basierend auf dem erlangten Bild von dem Bild-Erlangteil,
einen Decodier-Teil (22), der Information erkennt, die von dem Strichcode angezeigt wird, der durch die Striche geformt ist, basierend auf Zuständen der Striche, die von dem Strich-Erfassungsteil erfasst werden,
einen Überdruck-Erfassungsteil (23), der bestimmt, ob eine Vielzahl von Strichcodes überdruckt sind oder nicht, basierend auf Zuständen der Striche, die von dem Strich-Erfassungsteil (21) erfasst werden, und
einen Bestimmungs-Teil (24), der bestimmt, dass ein Erkennungsergebnis des Strichcodes durch den Decodier-Teil (22) ungültige Information ist, wenn der Überdruck-Erfassungsteil (23) erfasst, dass eine Vielzahl von Strichcodes überdruckt sind, und ein Erkennungsergebnis des Strichcodes durch den Decodierteil als gültige Information ausgibt, wenn der Überdruck-Erfassungsteil (23) nicht erfasst, dass eine Vielzahl von Strichcodes überdruckt sind.

2. Strichcode-Verarbeitungsgerät nach Anspruch 1, wobei der Überdruck-Erfassungsteil (23) bestimmt, ob eine Vielzahl von Strichcodes überdruckt sind oder nicht, indem er erfasst, basierend auf Intervallen der Striche, erfasst von dem Strich-Erfassungsteil (21), ob es zwei oder mehr Strichgruppen mit verschiedenen Frequenzen gibt.

3. Strichcode-Verarbeitungsgerät nach Anspruch 1, wobei der Überdruck-Erfassungsteil (23) bestimmt, ob eine Vielzahl von Strichcodes überdruckt sind oder nicht, basierend auf Positionen von fehlerkorrigierten Strichen, wobei die Fehlerkorrektur von dem Decodier-Teil (22) durchgeführt wird.

4. Strichcode-Verarbeitungsgerät nach Anspruch 1, wobei der Überdruck-Erfassungsteil (23) bestimmt, ob eine Vielzahl von Strichcodes überdruckt sind oder nicht, basierend auf der Zahl von Strichen, welche von langen Strichen in kurze Striche korrigiert werden durch Verwendung der Fehlerkorrektur, die von dem Decodier-Teil (22) durchgeführt wird.

5. Strichcode-Verarbeitungsgerät nach Anspruch 1, wobei der Überdruck-Erfassungsteil (23) bestimmt, ob eine Vielzahl von Strichcodes überdruckt sind oder nicht, basierend auf der Zahl von Strichen, deren Längen gleich oder größer als ein voreingestellter Maximalwert sind, wobei die Striche in einer Richtung senkrecht zu einer Anordnungsrichtung einer Vielzahl von Strichen sind, die den Strichcode formen, der als ein Bild von dem Bild-Erlangeteil (20) erlangt wird.

6. Strichcode-Verarbeitungsgerät nach Anspruch 1, wobei der Überdruck-Erfassungsteil (23) bestimmt, ob eine Vielzahl von Strichcodes überdruckt sind oder nicht, basierend auf den Endpunkten von Strichen, wobei die Striche in einer Richtung senkrecht zu einer Anordnungsrichtung einer Vielzahl von Strichen sind, die den Strichcode formen, der als ein Bild von dem Bild-Erlangeteil (20) erlangt wird.

7. Sortier-Gerät, das Artikel basierend auf Sortier-Information sortiert, umfassend:

einen Scanner (13), der ein Bild liest, das einen Strichcode enthält, der auf einem Artikel gedruckt ist,
einen Strich-Erfassungsteil (21), der eine Vielzahl von Strichen erfasst, die einen Strichcode formen, basierend auf dem Bild, das von dem Scanner gelesen wird,
einen Decodier-Teil (22), der Information erkennt, die von dem Strichcode angezeigt wird, der durch die Striche geformt wird, basierend auf Zuständen der Striche, die von dem Strich-Erfassungsteil erfasst werden,
einen Überdruck-Erfassungsteil (23), der bestimmt, ob eine Vielzahl von Strichcodes überdruckt sind oder nicht, basierend auf Zuständen der Striche, die von dem Strich-Erfassungsteil (21) erfasst werden,
einen Bestimmungs-Teil (24), der bestimmt, dass Information, die von dem Decodier-Teil (22) erkannt wird, ungültige Information ist, wenn der Überdruck-Erfassungsteil (23) erfasst, dass eine Vielzahl von Strichcodes überdruckt sind, und bestimmt ein Erkennungsergebnis des Strichcodes durch den Decodierteil (22) als eine gültige Sortier-Information des Artikels, wenn der Überdruck-Erfassungsteil (23) nicht erfasst, dass eine Vielzahl von Strichcodes überdruckt sind,
und einen Sortier-Teil (17), der den Artikel sortiert, basierend auf dem Erkennungsergebnis des Strichcodes, der als die Sortier-Information des Artikels von dem Bestimmungs-Teil bestimmt wird.

8. Sortier-Gerät nach Anspruch 7, wobei der Überdruck-Erfassungsteil (23) bestimmt, ob eine Vielzahl von Strichcodes überdruckt sind oder nicht, indem er erfasst, basierend auf Intervallen der Striche, die von dem Strich-Erfassungsteil (21) erfasst werden, ob es zwei oder mehr Strichgruppen mit verschiedenen Frequenzen gibt.

9. Sortier-Gerät nach Anspruch 7, wobei der Überdruck-Erfassungsteil (23) bestimmt, ob eine Vielzahl von Strichcodes überdruckt sind oder nicht, basierend auf Positionen von fehlerkorrigierten Strichen, wobei die Fehlerkorrektur von dem Decodier-Teil (22) durchgeführt wird.

10. Sortier-Gerät nach Anspruch 7, wobei der Überdruck-Erfassungsteil (23) bestimmt, ob eine Vielzahl von Strichcodes überdruckt sind oder nicht, basierend auf der Zahl von Strichen, die von langen Strichen zu kurzen Strichen korrigiert werden, unter Verwendung der Fehlerkorrektur, die von dem Decodierteil (22) durchgeführt wird.

11. Sortier-Gerät nach Anspruch 7, wobei der Überdruck-Erfassungsteil (23) bestimmt, ob eine Vielzahl von Strichcodes überdruckt sind oder nicht, basierend auf der Zahl von Strichen, deren Längen gleich oder größer als ein voreingestellter Maximalwert sind, wobei die Striche in einer Richtung senkrecht zu einer Anordnungsrichtung einer Vielzahl von Strichen sind, die den Strichcode formen, der als ein Bild von dem Bild-Erlangeteil (20) erlangt wird.

12. Sortier-Gerät nach Anspruch 7, wobei der Überdruck-Erfassungsteil (23) bestimmt, ob eine Vielzahl von Strichcodes überdruckt sind oder nicht, basierend auf den Endpunkten von Strichen, wobei die Striche in einer Richtung senkrecht zu einer Anordnungsrichtung von einer Vielzahl von Strichen sind, die den Strichcode formen, der als ein Bild von dem Bild-Erlangeteil (20) erlangt wird.

13. Strichcode-Verarbeitungsverfahren, das in einem Strichcode-Verarbeitungsgerät verwendet wird, die Schritte umfassend:

ein Erlangen eines Bildes, das einen Strichcode enthält,
ein Erfassen einer Vielzahl von Strichen, die einen Strichcode formen, basierend auf dem so erlangten Bild,

ein Erkennen von Information, die von dem Strichcode angezeigt wird, der von den Strichen geformt wird, basierend auf Zuständen der erfassten Striche,

ein Durchführen eines Überdruck-Erfassungsprozesses, um zu bestimmen, ob eine Vielzahl von Strichcodes überdruckt sind oder nicht, basierend auf Zuständen der erfassten Striche,

ein Bestimmen, dass ein Erkennungsergebnis des Strichcodes ungültige Information ist, wenn erfasst wird durch den Überdruck-Erfassungsprozess, dass eine Vielzahl von Strichcodes überdruckt sind, und

ein Ausgeben eines Erkennungsergebnis des decodierten Strichcodes als gültige Information, wenn nicht erfasst wird durch den Überdruck-Erfassungsprozess, dass eine Vielzahl von Strichcodes überdruckt sind.

## Revendications

1. Appareil de traitement de code à barres comprenant :

   une partie d'acquisition d'image (20) qui acquiert une image contenant un code à barres,
   une partie de détection de barres (21) qui détecte une pluralité de barres configurant un code à barres sur la base de l'image acquise par la partie d'acquisition d'image,
   une partie de décodage (22) qui reconnaît des informations indiquées par le code à barres configuré par les barres sur la base des états des barres détectées par la partie de détection de barres,
   une partie de détection de surimpression (23) qui détermine si une pluralité de codes à barres sont surimprimés ou non sur la base des états des barres détectées par la partie de détection de barres (21), et
   une partie de détermination (24) qui détermine qu'un résultat de reconnaissance du code à barres par la partie de décodage (22) consiste en des informations non valides lorsque la partie de détection de surimpression (23) détecte qu'une pluralité de codes à barres sont surimprimés et qui délivre un résultat de reconnaissance du code à barres par la partie de décodage en tant qu'informations valides lorsque la partie de détection de surimpression (23) ne détecte pas qu'une pluralité de codes à barres sont surimprimés.

2. Appareil de traitement de code à barres selon la revendication 1, dans lequel la partie de détection de surimpression (23) détermine si, oui ou non, une pluralité de codes à barres sont surimprimés en détectant, sur la base des intervalles des barres détectées par la partie de détection de barres (21), s'il y a deux groupes de barres ou plus ayant différentes fréquences.

3. Appareil de traitement de code à barres selon la revendication 1, dans lequel la partie de détection de surimpression (23) détermine si, oui ou non, une pluralité de codes à barres sont surimprimés sur la base des positions des barres dont les erreurs ont été corrigées, la correction d'erreur étant effectuée par la partie de décodage (22).

4. Appareil de traitement de code à barres selon la revendication 1, dans lequel la partie de détection de surimpression (23) détermine si une pluralité de codes à barres sont surimprimés ou non sur la base du nombre de barres qui sont corrigées de longues barres en courtes barres par l'utilisation de la correction d'erreur effectuée par la partie de décodage (22).

5. Appareil de traitement de code à barres selon la revendication 1, dans lequel la partie de détection de surimpression (23) détermine si une pluralité de codes à barres sont surimprimés ou non sur la base du nombre de barres dont les longueurs sont égales ou supérieures à une valeur maximum prédéterminée, les barres étant dans une direction perpendiculaire à une direction d'agencement d'une pluralité de barres configurant le code à barres acquis en tant qu'image par la partie d'acquisition d'image (20).

6. Appareil de traitement de code à barres selon la revendication 1, dans lequel la partie de détection de surimpression (23) détermine si une pluralité de codes à barres sont surimprimés ou non sur la base des points de fin des barres, les barres étant dans une direction perpendiculaire à une direction d'agencement d'une pluralité de barres configurant le code à barres acquis en tant qu'image par la partie d'acquisition d'image (20).

7. Appareil de tri qui trie des articles sur la base d'informations de tri, comprenant :

   un scanner (13) qui lit une image contenant un code à barres imprimé sur un article,
   une partie de détection de barres (21) qui détecte une pluralité de barres configurant un code à barres sur la base de l'image lue par le scanner,
   une partie de décodage (22) qui reconnaît des informations indiquées par le code à barres configuré par les barres sur la base des états des barres détectées par la partie de détection de barres,
une partie de détection de surimpression (23) qui détermine si une pluralité de codes à barres sont surimprimés ou non sur la base des états des barres détectées par la partie de détection de barres (21),
une partie de détermination (24) qui détermine que des informations reconnues par la partie de décodage (22) sont des informations non valides lorsque la partie de détection de surimpression (23) détecte qu'une pluralité de codes à barres sont surimprimés et qui détermine un résultat de reconnaissance du code à barres par la partie de décodage (22) en tant qu'informations de tri valides de l'article lorsque la partie de détection de surimpression (23) ne détecte pas qu'une pluralité de codes à barres sont surimprimés,
et une partie de tri (17) qui trie l'article sur la base du résultat de reconnaissance du code à barres déterminé en tant qu'informations de tri de l'article par la partie de détermination.

8.  Appareil de tri selon la revendication 7, dans lequel la partie de détection de surimpression (23) détermine si, oui ou non, une pluralité de codes à barres sont surimprimés en détectant, sur la base des intervalles des barres détectées par la partie de détection de barres (21), s'il y a deux groupes de barres ou plus ayant différentes fréquences.

9.  Appareil de tri selon la revendication 7, dans lequel la partie de détection de surimpression (23) détermine si, oui ou non, une pluralité de codes à barres sont surimprimés sur la base des positions des barres dont les erreurs ont été corrigées, la correction d'erreur étant effectuée par la partie de décodage (22).

10. Appareil de tri selon la revendication 7, dans lequel la partie de détection de surimpression (23) détermine si une pluralité de codes à barres sont surimprimés ou non sur la base du nombre de barres qui sont corrigées de longues barres en courtes barres par l'utilisation de la correction d'erreur effectuée par la partie de décodage (22).

11. Appareil de tri selon la revendication 7, dans lequel la partie de détection de surimpression (23) détermine si une pluralité de codes à barres sont surimprimés ou non sur la base du nombre de barres dont les longueurs sont égales ou supérieures à une valeur maximum prédéterminée, les barres étant dans une direction perpendiculaire à une direction d'agencement d'une pluralité de barres configurant le code à barres acquis en tant qu'image par la partie d'acquisition d'image (20).

12. Appareil de tri selon la revendication 7, dans lequel la partie de détection de surimpression (23) détermine si une pluralité de codes à barres sont surimprimés ou non sur la base des points de fin des barres, les barres étant dans une direction perpendiculaire à une direction d'agencement d'une pluralité de barres configurant le code à barres acquis en tant qu'image par la partie d'acquisition d'image (20).

13. Procédé de traitement de code à barres utilisé dans un appareil de traitement de code à barres, comprenant les étapes consistant à :

    acquérir une image contenant un code à barres,
    détecter une pluralité de barres configurant un code à barres sur la base de l'image ainsi acquise,
    reconnaître des informations indiquées par le code à barres configuré par les barres sur la base des états des barres détectées,
    effectuer un processus de détection de surimpression pour déterminer si une pluralité de codes à barres sont surimprimés ou non sur la base des états des barres détectées,
    déterminer qu'un résultat de reconnaissance du code à barres consiste en des informations non valides lorsqu'il est détecté par le processus de détection de surimpression qu'une pluralité de codes à barres sont surimprimés, et
    délivrer un résultat de reconnaissance du code à barres décodé en tant qu'informations valides lorsqu'il n'est pas détecté par le processus de détection de surimpression qu'une pluralité de codes à barres sont surimprimés.

FIG.1

10 — Control portion

12

| 21 | 22 | 24 |
|---|---|---|
| Bar detecting portion | Decoding portion | Determining portion |
| 20 | 23 | |
| Image input interface | Double-printing detecting portion | |

Bar code recognizing portion

13a

13

P

FIG. 2

Long bar    Ascender bar    Timing bar

Descender bar

FIG. 3

Pitch 1   Pitch 2

Bars with different
pitches are present
together

## FIG. 4

Scanning
line

Bar code image

## FIG. 5A

Light-and-shade
information

## FIG. 5B

Frequency analysis

Two peaks are present

Frequency

## FIG. 5C

Detection range

```
                    ┌─────────────┐
                    │    Start    │
                    └─────────────┘
                           │
                           ▼
         ┌──────────────────────────────────┐
         │      Acquire bar code image      │── S10
         └──────────────────────────────────┘
                           │
                           ▼
         ┌──────────────────────────────────┐
         │ Extract light-and-shade information │── S11
         └──────────────────────────────────┘
                           │
                           ▼
         ┌──────────────────────────────────┐
         │        Frequency analysis        │── S12
         └──────────────────────────────────┘
                           │
                           ▼
         ┌──────────────────────────────────┐
         │     Count number (Nf) of peaks    │── S13
         └──────────────────────────────────┘
                           │
                           ▼
    No              ◇──────────────◇ ── S14
   ┌────────────────    Nf ≧ 2?    
   │                ◇──────────────◇
   │                       │ Yes
   │                       ▼
   │     ┌──────────────────────────────────┐
   │     │     Determine double printing     │── S15
   │     └──────────────────────────────────┘
   │                       │
   └───────────────────────┤
                           ▼
                    ┌─────────────┐
                    │     End     │
                    └─────────────┘
```

FIG. 6

Left side        Right side

FIG. 7A

        x     x    x   x

Left side        Right side

FIG. 7B       Number of errors is larger on right side

FIG. 8

Right answer : Ascender bar
Detection : Long bar

Right answer : Descender bar
Detection : Long bar

Right answer : Timing bar
Detection : Descender bar

FIG. 9

FIG. 10

Long bar

Long bar

## F I G. 11

Start

Acquire bar code image ⊢—S40

Search for bars longer than preset threshold value TL ⊢—S41

Count number (Nn) of long bars ⊢—S42

S43

Nn≧TN?          No

Yes

Determine double printing ⊢—S44

End

## F I G. 12

F I G. 13

F I G. 14A

F I G. 14B

F I G. 14C

**F I G. 15**

**EP 2 075 739 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006065679 A

- WO 9733248 A

**Non-patent literature cited in the description**

- **Imai.** Coding Theory. Institute of Electronics, Information and Communication Engineers of Japan, 1990